# EUROPÄISCHE PATENTSCHRIFT

(11) **EP 0 743 822 B1**
(45) Veröffentlichungstag und Bekanntmachung des Hinweises auf die Patenterteilung: **18.11.1998**
(21) Anmeldenummer: 95909627.2
(22) Anmeldetag: 09.02.1995
(51) Int. Cl.: A21B 3/04, F24C 15/20, F28B 1/06

(54) **DAMPFKONDENSIERER**
STEAM CONDENSER
CONDENSEUR DE VAPEUR

(30) Priorität: 10.02.1994 DE 9402193 U
(43) Veröffentlichungstag der Anmeldung: 27.11.1996
(73) Patentinhaber: HOBA TECHNISCHE SOFTWARE GMBH, 74523 Schwäbisch Hall (DE)
(72) Erfinder: BARTSCH, Ingo Edwin, D-74523 Schwäbisch Hall-Hessental (DE); SATTELMEIER, Uwe, D-74538 Rosengarten (DE); SATTELMEIER, Joachim, D-47495 Rheinberg (DE)
(74) Vertreter: Clemens, Gerhard, Dr.-Ing.
(86) Internationale Anmeldenummer: DE9500171
(87) Internationale Veröffentlichungsnummer: WO9521530

(56) Entgegenhaltungen:
- EP-A- 0 275 127
- EP-A- 0 290 925
- EP-A- 0 388 751
- EP-A- 0 634 612
- DE-A- 2 040 797
- DE-A- 2 803 091
- DE-A- 3 533 543
- DE-A- 3 715 132
- DE-C- 3 643 299
- GB-A- 154 308
- GB-A- 985 991
- US-A- 917 299
- US-A- 4 114 589

## Beschreibung

### TECHNISCHES GEBIET

Die vorliegende Erfindung betrifft einen Dampfkondensierer insbesondere für die Backtechnik zum Anbau an einen Backofen, mit einem Gehäuse, einem innerhalb des Gehäuses vorhandenen Dampfkanal, dem Dampf aus dem Backofen zugeführt wird und einer Kühllufteinrichtung.

Bei der Herstellung von Backwaren entsteht zwangsläufig Feuchtigkeit, die erstens aus dem austretenden Wasseranteil der Backwaren und zweitens durch zusätzliches Besprühen der Backwaren entsteht. Dieses zusätzliche Besprühen ist notwendig, um ein Austrocknen der Backwaren zu vermeiden. Bei dieser Besprühung entsteht ein schlagartiger Dampfschwall, der nach kurzem Verweilen in der Backkammer wieder ausgeleitet werden muß, da sonst die feuchtigkeitsübersättigte Luft eine Qualitätsminderung der Backwaren bewirken würde. Am einfachsten wäre es, die feuchte Luft in den Backraum abzuleiten, dort würde sie aber auf die Dauer Schäden an der Bausubstanz hervorrufen. (z. B. durch Schimmelbildung)

### STAND DER TECHNIK

Aus DE-U-92 01 162.4 ist ein Dampfkondensierer bekannt, insbesondere für die Backtechnik zum Anbau an den Backofen, der aus einem Gehäuse besteht, in dem ein aus mehreren übereinanderliegenden horizontalen Abschnitten bestehender Dampfkanal geführt ist, der seitlich zumindest teilweise von Kühlluftkanälen umschlossen ist, wobei die Abschnitte des Dampfkanals und die Kühlluftkanäle aus etagenartig aufeinandergesetzten, im wesentlichen baugleichen Elementen modulartig gebildet ist. Jedes Element ist als einstückiges Gußteil mit einer vorgegebenen Wandstärke ausgeführt, das im Zusammenbau mit anderen Elementen sowohl die Wandungen der Abschnitte des Dampfkanals als auch die Wandungen der beidseitig davon angeordneten Kühlluftkanäle bildet.

Bei dem bekannten Dampfkondensierer ist die Wärmekopplung der einzelnen Bauteile des Dampfkanals untereinander relativ groß, so daß nicht optimale Werte hinsichtlich der Trocknung des eingeleiteten Dampfes erzielt werden können. Infolge des in dem Dampf enthaltenen Fettanteiles kommt es immer zur Verklebung der Bauteile.Ein dauerhaftes Funktionieren ist zudem bei dem bekannten Dampfkondensierer nur unter Einsatz von Dichtungen möglich. Die Reinigung derartiger Dampfkondensierer, insbesondere im Bereich innerhalb des Dampfkanales, kann nur ungenügend oder nur mit sehr hohem Aufwand durchgeführt werden. Darüberhinaus weisen die bekannten Dampfkondensierer ein relativ hohes Gewicht auf, das mit relativ großen Abmessungen einhergeht.

### DARSTELLUNG DER ERFINDUNG

Der vorliegenden Erfindung liegt die Aufgabe bzw. das technische Problem zugrunde, einen gegenüber dem genannten Stand der Technik verbesserten Dampfkondensierer anzugeben, der einen einfachen und montagegerechten Aufbau aufweist, der ohne Verwendung von Dichtungsmaterialien auskommen kann und somit insgesamt einen wirtschaftlichen Einsatz gewährleistet.

Der erfindungsgemäße Dampfkondensierer ist durch die Merkmale des Anspruchs 1 gegeben. Vorteilhafte Ausgestaltungen und Weiterbildungen sind Gegenstand der Unteransprüche.

Demgemäß zeichnet sich der erfindungsgemäße Dampfkondensierer dadurch aus, daß der Dampfkanal durch übereinander und/oder nebeneinander beabstandet angeordnete miteinander in Strömungsverbindung stehende Hohlprofilelemente gebildet ist.

Bevorzugt wird die Strömungsverbindung der Hohlprofile untereinander jeweils durch eine bevorzugt steckbare Verbindungshülse gebildet.

Der Aufbau des Dampfkanales aus einzelnen Kohlprofilelementen, kann unter Einsatz der Verbindungshülsen in einfacher Art und Weise zusammengesteckt werden. Dieser modulartige Aufbau ermöglicht eine schnelle und kostengünstige Montage, wobei darüberhinaus eine Verwendung von Dichtungsmaterialien entfallen kann. Durch die beabstandete Anordnung der Hohlprofilelemente wird zudem erfindungsgemäß gewährleistet, daß die Wärmeübertragung der einzelnen Elemente des Dampfkanales zueinander sehr gering gehalten werden kann und gleichzeitig eine optimale Umströmung der Dampfkanalaußenseite von Kühlluft erzielt wird, was sich besonders günstig auf das Trocknungsergebnis auswirkt. Dadurch kann der Weg, den die zu trocknende Luft innerhalb des Dampfkanales zurücklegen muß, um gute Trocknungseigenschaften aufzuweisen, relativkleingehalten werden, was wiederum dazu führt, daß die Abmessungen des Dampfkondensierers gering sind.

Eine bevorzugte Ausgestaltung des erfindungsgemäßen Dampfkondensierers zeichnet sich dadurch aus, daß die Stirnseiten der Hohlprofilelemente, mit Ausnahme der letzten im Dampfkanal in Längsrichtung liegenden Stirnseite des obersten Hohlprofilelementes geschlossen ausgebildet sind.Dabei kann in einer weiteren Ausgestaltung die Kühleinrichtung bevorzugt mehrere Ventilatoreinrichtungen aufweisen, die an der seitlichen Außenwandung des Gehäuses oder im wesentlichen parallel zur Längsrichtung der Hohlprofile angeordnet sind und die geschlossenen Stirnflächen und/oder die Längswandungen der Hohlprofilelemente mit Kühlluft beaufschlagen.

Es hat sich als besonders günstig herausgestellt, die Hohlprofile alternierend mit einer vorgehbaren Neigung zur Horizontalen auszubilden, wodurch sich ein mäanderförmiger Verlauf ergibt, so daß das sich in dem Kanal bildende Kondensat nach unten in eine vorhandene Wanneneinrichtung abfließen kann.

Zu besonders günstigen Ergebnissen hinsichtlich des Trocknungsgrades der aus dem Dampfkondensierer austretenden Luft ist erfindungsgemäß eine Umlenkeinrichtung vorhanden, die die zumindest aus dem offenen Endbereich des obersten Hohlprofils austretende Luft nach unten in das Gehäuseinnere umlenkt.In Verbindung mit der Kühllufteinrichtung wird diese nahezu vollständig trockene Luft nochmals im Gehäuseinneren verwirbelt und gekühlt, so daß dann daran anschließend die vollständig getrocknete Luft aus dem Gehäuse entweichen kann.

Eine weitere Aufgabe bzw. ein weiteres technisches Problem der vorliegenden Erfindung besteht darin, einen Dampfkondensierer anzugeben, der mit handelsüblichen Reinigungsmitteln schnell und kostengünstig, insbesondere bei komplett montierten Dampfkondensierern, gereinigt werden kann. Diese Aufgabe wird erfindungsgemäß dadurch gelöst, daß zumindest im Endbereich des oberen Hohlprofilelementes eine Anschlußeinrichtung vorhanden ist, an die eine Zuführrichtung für ein Reinigungsmittel anschließbar ist. Bevorzugt ist die Anschlußeinrichtung als lösbar aufsteckbare Adaptereinrichtung ausgebildet, die insbesondere ein Außengewinde aufweist, auf das eine übliche Schlauchkupplung aufgeschraubt werden kann.

Im unteren Bereich des Dampfkondensierers ist eine Wanneneinrichtung vorhanden, der der Dampf aus dem Backofen zugeführt wird und mit der der Dampfkanal in Strömungsverbindung steht, wobei in dieser Wanneneinrichtung insbesondere der Zuführkanal für Frischwasser für den Backofen bereichsweise angeordnet ist. Hierbei weist die Wanneneinrichtung bevorzugt eine Abflußeinheit auf, die erfindungsgemäß eine Anschlußeinrichtung für eine Abführeinrichtung für das anfallende Kondensat aufweist. Hier kann dann eine als Abführeinrichtung ausgebildete Schlaucheinheit angeschlossen werden, die einer Pumpeinrichtung zugeführt wird, die nach Zugabe eines Reinigungsmediums über die Zuführeinrichtung an den Dampfkanal angeschlossen ist.

Eine bevorzugte Ausgestaltung des erfindungsgemäßen Dampfkondensierers zeichnet sich dadurch aus, daß mehrere durch aufeinandergesteckte Hohlprofilelemente gebildete, innerhalb des Gehäuses nebeneinander angeordnete Dampfkanäle vorhanden sind. Durch diese Maßnahme läßt sich das zu trocknende Dampfvolumen unter Beibehaltung einer kompakten Bauweise des Dampfkondensierers erhöhen.

Weitere Ausführungen und Vorteile der Erfindung ergeben sich durch die in den Ansprüchen ferner aufgeführten Merkmale sowie durch das nachstehend angegebene Ausführungsbeispiel. Die Merkmale der Ansprüche können in beliebiger Weise miteinander kombiniert werden, insoweit sie sich offensichtlich nicht gegenseitig ausschließen.

### KURZE BESCHREIBUNG DER ZEICHNUNG

Die Erfindung sowie eine vorteilhafte Ausführungsform derselben wird im folgenden anhand des in der Zeichnung dargestellten Beispiels näher beschrieben und erläutert. Die in der Beschreibung der Zeichnung zu entnehmenden Merkmale können einzeln, für sich oder zu mehreren beliebigen Kombinationen erfindungsgemäß angewandt werden. Es zeigen:
- Fig. 1: schematische Stirnseitenansicht eines erfindungsgemäßen Dampfkondensierers bei abgenommenem Gehäuse, ohne Darstellung der Längsneigung der Hohlprofilelemente,
- Fig. 2: schematische Draufsicht auf ein Hohlprofilelement,
- Fig. 3: schematische Seitenansicht einer Verbindungshülse,
- Fig. 4: schematische Detail-Seitenlängsansicht des Dampfkondensierers gemäß Fig. 1,
- Fig. 5: schematische Detail-Längsseitenansicht des Dampfkondensierers gemäß Fig. 1, mit Gehäuse, Kühleinrichtung und schematisch dargestellter Luftführung,
- Fig. 6: schematische Stirnseitenansicht des Dampfkondensierers gemäß Fig. 1 im oberen Bereich bei teilweise abgenommener Stirnseitenwand des Gehäuses,
- Fig. 7: schematische Ansicht einer Anschlußeinrichtung zum Anschließen einer Zuführeinrichtung für ein Reinigungsmedium,
- Fig. 8: schematische Detail-Längsseitenansicht einer weiteren Ausführungsvariante des erfindungsgemäßen Dampfkondensierers und
- Fig. 9: schematische Detaildraufsicht auf eine Kanalführung mit nebeneinander angeordneten Hohlprofilelementen und dazwischen vorhandenen O-Ringen.

### WEGE ZUM AUSFÜHREN DER ERFINDUNG

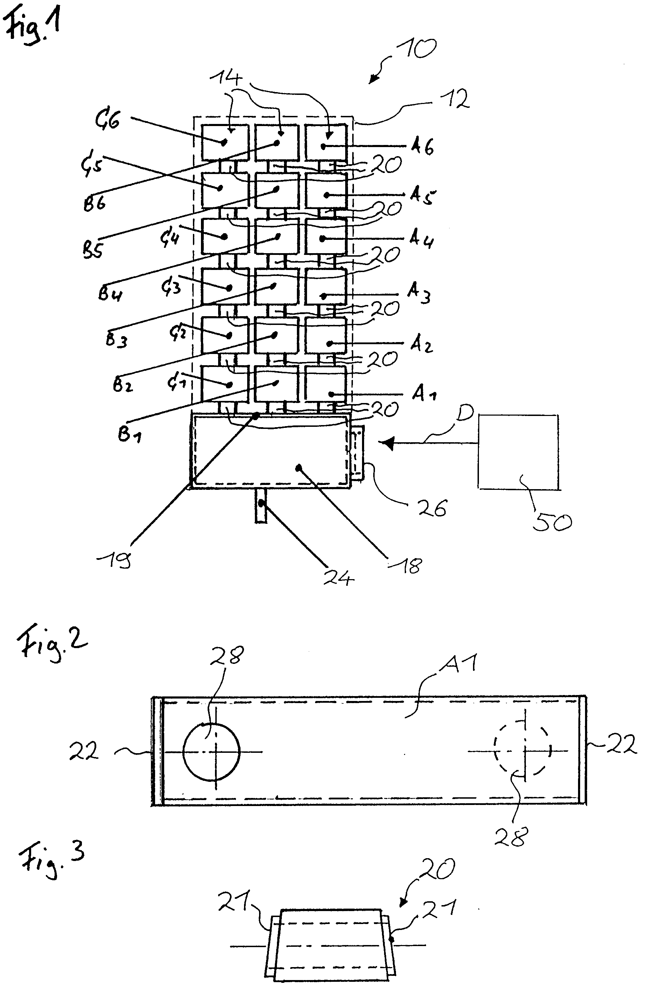

Ein Dampfkondensierer 10 weist in seinem unteren Bereich eine Wanneneinrichtung 18 auf, der über eine Dampfeintrittsöffnung 26 Dampf aus einem in Fig. 1 stark schematisiert dargestellten Backofen 50 zugeführt wird (Pfeil D). Oberhalb der Wanneneinrichtung 18 sind drei Dampfkanäle 14 an die Wanneneinrichtung 18 angeschlossen, die durch Hohlprofilelemente A1 bis A6, B1 bis B6, C1 bis C6 und zwischen den Hohlprofilelementen angeordneten Verbindungshülsen 20 gebildet werden und mit der Wanneneinrichtung 18 in Strömungsverbindung stehen.

Die durch die drei Reihen von Hohlprofilelementen A..., B..., C... gebildeten Dampfkanäle sind auf der Oberseite 19 der Wanneneinrichtung 18 angeschlossen.

Auf der Unterseite der Wanneneinrichtung 18 ist eine Abflußeinheit 24 vorhanden. Die drei Dampfkanäle 14 sind von einem Gehäuse 12 umgeben, das in Verbindung mit der Wanneneinrichtung 18 die drei Dampfkanäle 14 vollständig umschließt.

Die Hohlprofilelemente A bis C sind als quadratische Rohrprofile ausgebildet, deren Stirnseiten 22 verschlossen sind, bis auf den freien Endbereich des obersten Hohlprofilelementes A6, B6, C6, das offen ist. Alternierend weist jedes Hohlprofil, bis auf das Oberste, im rechten und linken Endbereich oberseitig bzw. unterseitig eine Öffnung 28 auf, in die die Verbindungshülse 20 teilweise eingesteckt werden kann. Die Verbindungshülsen 20 sind als Rohrprofilelemente ausgebildet, deren Stirnebenen 21 zueinander geneigt sind. Im Endbereich weisen die Verbindungshülsen beidseitig einen verjüngten Außenquerschnitt auf, wobei im Bereich dieses verjüngten Außenquerschnittes das Einstecken der Verbindungshülse 20 in die Öffnung 28 des jeweiligen Hohlprofilelementes A bis C erfolgt.

Anstelle einer Verbindungshülse kann gemäß Fig. 9 ein O-Ring 70 zwischen den Hohlprofilelementen A1, A2, A3, A4, A5 angeordnet werden, wobei die Verbindung der Hohlprofilelemente A untereinander durch eine äußere Verbindungseinheit erfolgt. Diese Verbindungseinheit ist beispielhaft als Gewindestange 72 ausgebildet, die in entsprechend im Endbereich der Hohlprofilelemente vorhandene Innengewinde von Klemmeinheiten 74 eingreift, wodurch die nebeneinanderliegenden Hohlprofilelemente A dichtend übereinander geklemmt werden. Die Dampfführung ist in Fig. 9 mit gestrichelten Pfeilen dargestellt.

An den Stirnseiten des Gehäuses 12 ist beidseits eine Kühleinrichtung 16 angeordnet, die aus den Ventilatoreinheiten 16.1, 16.2 und 16.3 gebildet wird. Diese Ventilatoreinheiten 16 führen von außen Kühlluft K in das Innere des Gehäuses 12. Die Luftströmrichtung der Kühlluft K ist zunächst so gerichtet, daß die Stirnendbereiche 22 der Hohlprofilelemente A bis C vornehmlich mit Kühlluft beaufschlagt werden.

Die freien Stirnseiten der oberen Hohlprofilelemente A6 bis C6 weisen eine Öffnung 32 auf, durch die die nahezu getrocknete Luft austreten kann. Im Bereich des aus den Dampfkanälen 14 austretenden Dampfes ist keine Ventilatoreinheit angeordnet.

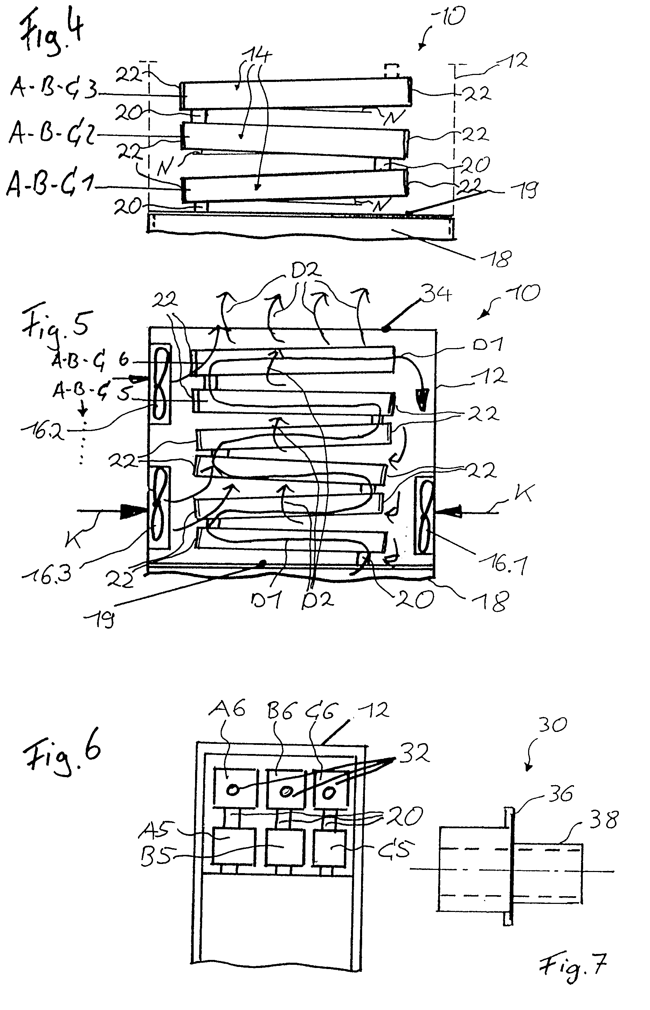

Der Trocknungsvorgang läuft im Einzelnen wie folgt ab. Der aus dem Backofen kommende Dampf wird über die Dampfeintrittsöffnung 26 in die Wanneneinrichtung 18 geführt und von dort in die einzelnen Dampfkanäle 14 gleichmäßig verteilt. Durch Umlenkung in den Kanälen 14 wird der Dampf nach oben geführt und kondensiert an der Wandung der Hohlprofilelemente A bis C (siehe Fig. 5, Pfeil D1). Die Führung des Dampfes erfolgt hierbei gemäß der alternativ geneigten Anordnung (Bezugszeichen N) der Hohlprofilelemente A bis C im Wesentlichen mäanderförmig. Das entstehende Kondensat fließt durch die einzelnen Hohlprofilelemente A bis C, die wie beschrieben, mit einem leichten Gefälle zueinander angeordnet sind, zurück in die Wanneneinrichtung 18, bei der sich auf der Bodenseite eine Abflußeinheit 24 befindet, durch die hindurch das Kondensat abfließen kann. Die noch minimal feuchte Restluft strömt an der Stirnseite des obersten Elementes A6 bis C6 aus und wird nach unten in Richtung auf den Deckel 19 der Oberseite der Wanneneinrichtung 18 umgelenkt. Dadurch findet eine Resttrocknung der Luft statt, da die umgelenkte Luft erneut der durch die Kühleinrichtung 16 zugeführten Kühlluft ausgesetzt ist. Die noch aufgeheizte trockene Luft wird mit der Kühlluft nach oben (Pfeil D2) in den Backraum geblasen.

Im oberen Bereich des Gehäuses 12 befindet sich im freien Endbereich der Hohlprofilelemente A6 bis C6 ein nicht näher dargestellter abnehmbarer Deckel, mittels dem das Gehäuse 12 bereichsweise geöffnet werden kann (siehe Fig. 6). Dadurch ist das oberste Element A6 bis C6, das in diesem Bereich die Öffnung 32 aufweist, von außen zugänglich. Auf die Öffnungen 32 wird ein Adapter 30 eingesteckt. Dieser Adapter weist in seinem Einsteckbereich einen Außendurchmesser auf, der im wesentlichen dem Innendurchmesser der Öffnung 32 entspricht. Den Anschlag bildet ein den Adapter 30 umgebender Flansch 36. Der im eingesteckten Zustand des Adapters 30 überstehende Außenbereich 38 ist geeignet, an einen Schlauch angeschlossen zu werden. Der Adapter 30 ermöglicht somit eine einfache Reinigungsmöglichkeit der Innenwand der Dampfkanäle 14, die im Laufe der Zeit aufgrund des in dem Dampf enthaltenen Fettanteiles verschmutzen, durch einfaches Anschließen eines Schlauches an den Adapter 30. Der nicht dargestellte Schlauch wird an eine Pumpe angeschlossen und Reinigungsflüssigkeit wird durch die Dampfkanäle 14 geleitet.

Bevorzugt wird an der Abflußeinheit 24 ebenfalls ein Schlauch angeschlossen, der in einen nicht dargestellten Behälter mündet, an den die Pumpe angeschlossen ist. Dadurch läßt sich ein Reinigungskreislauf erzielen, wobei an einer nicht dargestellten Stelle eine vorgebbare Menge an Reinigungsmedium zugesetzt wird.

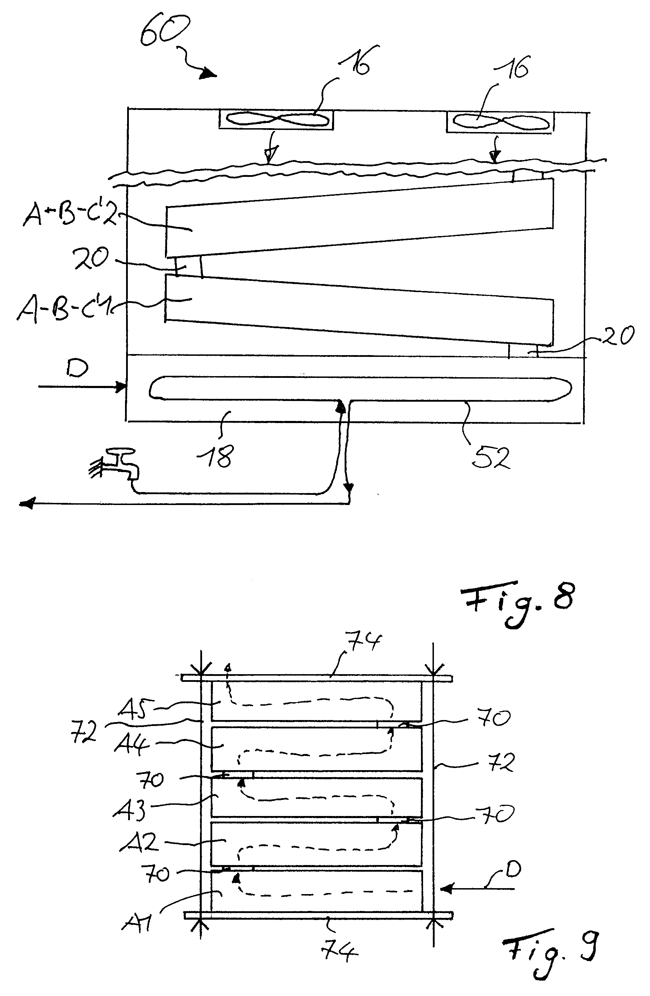

Die in Fig. 8 schematisch dargestellte zweite Ausführungsvariante eines Dampfkondensierers 60 weist eine Kühllufteinrichtung 16 auf, die so angeordnet ist, daß die Kühlluft nicht auf die Stirnseite 22 der Hohlprofilelemente A, B, C sondern auf die gesamte Länge der Hohlprofile auftreffen, insbesondere bei liegender Anordnung der Hohlprofilelemente A, B, C. Auch eine Kombination der Kühllufteinrichtungen 16 mit den Kühllufteinrichtungen 16 der Figuren 1 bis 7 kann umgesetzt werden.

Gleiche Bauteile des Dampfkondensierers 60 tragen dasselbe Bezugszeichen wie die des oben beschriebenen Dampfkondensierers 10 und werden nicht nochmals erläutert.

Zusätzlich ist in dem Dampfkondensierer 60 in der Wanneneinrichtung 18 eine Rohrleitung 52 eingebaut, die das benötigte Wasser, um den Dampf in dem nicht näher dargestellten Backofen zu erzeugen, zuführt. Durch die teilweise Anordnung innerhalb der Wanneneinrichtung 18 wird das zugeführte Wasser erwärmt, wodurch sich der Energieverbrauch des Backofens beim Garen deutlich verringert. Durch das Vorsehen dieser Rohrleitung 52 wird der Wirkungsgrad des Dampfkondensierers in Verbindung mit dem Backofen deutlich erhöht.

Die dargestellten Ausführungsbeispiele zeigen lediglich zwei konkrete Konstruktionen des erfindungsgemäßen Dampfdosierers. Insbesondere die Hohlprofilelemente und Verbindungshülsen können andere Querschnittsarten aufweisen, ohne daß dadurch der Schutzbereich des erfindungsgemäßen Dampfkondensierers verlassen wird.

Der erfindungsgemäße Dampfkondensierer ermöglicht eine äußerst einfache Reinigungsmöglichkeit und gewährleistet eine dauerhafte Funktion ohne des zusätzlichen Einsatzes von Dichtmaterialien. Eine Wärmekopplung der den Dampfkanal bildenden Bauteile wird durch Beabstanden derselben vermieden, wodurch ein sehr guter Trocknungsgrad erzielt werden kann. Darüberhinaus läßt sich der erfindungsgemäße Dampfkondensierer in einfacher Art und Weise herstellen, bedingt durch das modulare Stecksystem, wobei sich eine deutliche Gewichtsersparnis und Verringerung der Außenabmessungen erzielen läßt.

Als Material für die Hohlprofilelemente und/oder Verbindungshülsen wird bevorzugt Edelstahl oder Aluminium eingesetzt.

In einer nicht dargestellten Ausführungsvariante ist die Kühleinrichtung auf einer Seite angeordnet. So kann die in Fig. 5 rechts unten dargestellte Ventilatoreinheit 16.1 auf der linken Seite angeordnet sein, so daß dort dann drei Ventilatoreinheiten übereinander vorhanden sind. Das Anordnen der Kühleinrichtung auf nur einer Seite bringt Vorteile bei der Verkabelung mit sich.

## Patentansprüche

1. Dampfkondensierer (10), insbesondere für die Backtechnik zum Anbau an einen Backofen, mit
- einem Gehäuse (12),
- einem innerhalb des Gehäuses (12) vorhandenen Dampfkanal (14), dem Dampf aus dem Backofen zugeführt wird,
- einer Kühllufteinrichtung (16)
**dadurch gekennzeichnet,** daß
- der Dampfkanal (14) durch übereinander und/oder nebeneinander beabstandet angeordnete miteinander in Strömungsverbindung stehende Hohlprofilelemente (A1,..., A6; B1,...,B6; C1,..., C6) gebildet ist.

2. Dampfkondensierer nach Anspruch 1,
**dadurch gekennzeichnet,** daß
die Strömungsverbindung der Hohlprofilelemente (A1,..., A6; B1,..., B6; C1,..., C6) untereinander jeweils durch eine bevorzugt steckbare Verbindungshülse (20) gebildet ist.

3. Dampfkondensierer nach einem der Ansprüche 1 und/oder 2,
**dadurch gekennzeichnet,** daß
die Stirnseiten der Hohlprofilemente (A1,..., A6; B1,..., B6; C1,..., C6), mit Ausnahme der letzten im Dampfkanal in Längsrichtung liegenden Stirnseite des obersten Hohlprofilelementes (A6, B6, C6) geschlossen ausgebildet sind.

4. Dampfkondensierer nach einem oder mehreren der vorstehenden Ansprüche,
**dadurch gekennzeichnet,** daß
die Kühllufteinrichtung (16) mehrere Ventilatoreinrichtungen (16.1; 16.2; 16.3) aufweist, die an der seitlichen Außenwand des Gehäuses (12) oder im wesentlichen parallel zur Längsrichtung der Hohlprofile angeordnet sind und vornehmlich die geschlossene Stirnflächen (22) und/oder die Längswandungen der Hohlprofilelemente (A1,..., A6; B1,..., B6; C1,..., C6) mit Kühlluft beaufschlagen.

5. Dampfkondensierer nach einer oder mehreren der vorstehenden Ansprüche,
**dadurch gekennzeichnet,** daß
die Hohlprofilelemente (A1,..., A6; B1,..., B6; C1,..., C6) alternierend die Neigung N gegenüber einer Horizontalen aufweisen.

6. Dampfkondensierer nach einer oder mehreren der vorstehenden Ansprüche,
**gekennzeichnet durch**
eine Umlenkrichtung, die die zunächst an dem offenen Endbereich des obersten Hohlprofils austretende Luft nach unten umlenkt.

7. Dampfkondensierer nach einer oder mehreren der vorstehenden Ansprüche,
**dadurch gekennzeichnet,** daß
zunächst im Endbereich des obersten Hohlprofilelementes (A6, B6, C6) eine Anschlußeinrichtung (30) vorhanden ist zum Anschließen einer Zuführeinrichtung für ein Reinigungsmedium.

8. Dampfkondensierer nach einer oder mehreren der vorstehenden Ansprüche,
**dadurch gekennzeichnet,** daß
die Anschlußeinrichtung als lösbare Adaptereinrichtung (30) ausgebildet ist.

9. Dampfkondensierer nach einer oder mehreren der vorstehenden Ansprüche,
**dadurch gekennzeichnet,** daß
die Hohlprofilelemente (A1,..., A6; B1,..., B6; C1,... C6) einen Rechteckrohr/Quadratrohr/Rundrohrquerschnitt aufweisen.

10. Dampfkondensierer nach einem oder mehreren der vorstehenden Ansprüche,
**dadurch gekennzeichnet,** daß,
eine Wanneneinrichtung (18) vorhanden ist, der der Dampf aus dem Backofen zugeführt wird und mit der der Dampfkanal (14) in Strömungsverbindung steht, wobei in dieser Wanneneinrichtung insbesondere der Zuführkanal für Frischwasser für den Backofen bereichsweise angeordnet ist.

11. Dampfkondensierer nach einem oder mehreren der vorstehenden Ansprüche,
**dadurch gekennzeichnet,** daß
die Wanneneinrichtung (18) eine Abflußeinheit (24) aufweist, die insbesondere eine Anschlußeinrichtung für eine Abführeinrichtung für das anfallende Kondensat aufweist.

12. Dampfkondensierer nach den Ansprüchen 7, 8 und 11,
**dadurch gekennzeichnet,** daß
die Zuführeinrichtung und die Abführeinrichtung über eine Pumpeinrichtung gekoppelt sind.

13. Dampfkondensierer nach einem oder mehreren der vorstehenden Ansprüche,
**dadurch gekennzeichnet,** daß
das Gehäuse eine lösbare Deckeleinheit aufweist.

14. Dampfkondensierer nach einer oder mehreren der vorstehenden Ansprüche,
**dadurch gekennzeichnet,** daß
mehrere durch aufeinander gesteckte innerhalb des Gehäuses nebeneinander angeordnete Hohlprofilelemente gebildete Dampfkanäle vorhanden sind (Fig. 1).

15. Dampfkondensierer nach einem oder mehreren der vorstehenden Ansprüche,
**dadurch gekennzeichnet,** daß
die Hohlprofilelemente und/oder Verbindungshülsen aus Edelstahl oder Aluminium bestehen.

16. Dampfkondensierer nach Anspruch 2,
**dadurch gekennzeichnet,** daß
die Verbindungshülse als O-Ring (70) ausgebildet ist.

## Claims

1. Steam condenser (10), especially for baking, to be mounted on a baking oven, with
- a housing (12),
- a steam duct (14) which is present within the housing (12) and to which steam from the baking oven is supplied,
- a cooling-air device (16),
characterized in that
- the steam duct (14) is formed by hollow profile elements (A1, ..., A6; B1, ..., B6; C1, ..., C6) arranged at a distance one above the other and/or next to one another and flow-connected to one another.

2. Steam condenser according to Claim 1, characterized in that the flow connection between the hollow profile elements (A1, ..., A6; B1, ..., B6; C1, ..., C6) is formed in each case by a preferably insertable connecting sleeve (20).

3. Steam condenser according to one of Claims 1 and/or 2, characterized in that the end faces of the hollow profile elements (A1, ..., A6; B1, ..., B6; C1, ..., C6), with the exception of the last end face of the uppermost hollow profile element (A6, B6, C6), the said end face lying in the steam duct in the longitudinal direction, are designed to be closed.

4. Steam condenser according to one or more of the preceding claims, characterized in that the cooling-air device (16) has a plurality of fan devices (16.1; 16.2; 16.3) which are arranged on the lateral outer wall of the housing (12) or essentially parallel to the longitudinal direction of the hollow profiles and mainly apply cooling air to the closed end faces (22) and/or the longitudinal walls of the hollow profile elements (A1, ..., A6; B1, ..., B6; C1, ..., C6).

5. Steam condenser according to one or more of the preceding claims, characterized in that the hollow profile elements (A1, ..., A6; B1, ..., B6; C1, ..., C6) alternately are at the inclination N to a horizontal.

6. Steam condenser according to one or more of the preceding claims, characterized by a deflecting device which deflects downwards the air initially emerging at the open end region of the uppermost hollow profile.

7. Steam condenser according to one or more of the preceding claims, characterized in that there is, first, in the end region of the uppermost hollow profile element (A6, B6, C6), a connection device (30) for connecting a supply device for a cleaning medium.

8. Steam condenser according to one or more of the preceding claims, characterized in that the connection device is designed as a releasable adapter device (30).

9. Steam condenser according to one or more of the preceding claims, characterized in that the hollow profile elements (A1, ..., A6; B1, ..., B6; C1, ..., C6) have the cross-section of a rectangular tube/square tube/round tube.

10. Steam condenser according to one or more of the preceding claims, characterized in that there is a sump device (18), to which the steam from the baking oven is supplied and to which the steam duct (14) is flow-connected, and, in particular, the supply duct for fresh water for the baking oven is arranged, in regions, in this sump device.

11. Steam condenser according to one or more of the preceding claims, characterized in that the sump device (18) has a flow-off unit (24) which has, in particular, a connection device for a discharge device for the condensate which occurs.

12. Steam condenser according to Claims 7, 8 and 11, characterized in that the supply device and the discharge device are coupled via a pumping device.

13. Steam condenser according to one or more of the preceding claims, characterized in that the housing has a releasable lid unit.

14. Steam condenser according to one or more of the preceding claims, characterized in that there is a plurality of steam ducts formed by hollow profile elements slipped one onto the other and arranged next to one another within the housing (Figure 1).

15. Steam condenser according to one or more of the preceding claims, characterized in that the hollow profile elements and/or connecting sleeves consist of high-grade steel or aluminium.

16. Steam condenser according to Claim 2, characterized in that the connecting sleeve is designed as an O-ring (70).

## Revendications

1. Condenseur de vapeur (10), en particulier pour la technique boulangère, pour l'installation dans un four, comportant
- un corps (12),
- un passage pour la vapeur (14) présent à l'intérieur du corps (12), vers lequel est conduite la vapeur provenant du four,
- un dispositif d'air de refroidissement (16),
caractérisé en ce que le passage pour la vapeur (14) est formé par des éléments de profilés creux (A1,..., A6 ; B1,..., B6 ; C1,..., C6) communiquant entre eux par accouplement hydraulique et disposés de façon espacée les uns au-dessus des autres et/ou les uns à côté des autres.

2. Condenseur de vapeur selon la revendication 1, caractérisé en ce que l'accouplement hydraulique entre les éléments de profilés creux (A1,..., A6 ; B1,..., B6 ; C1,..., C6) est formé par un manchon de raccordement de préférence enfichable (20) respectif.

3. Condenseur de vapeur selon l'une des revendications 1 et/ou 2, caractérisé en ce que les faces avant des éléments de profilés creux (A1,..., A6 ; B1,..., B6 ; C1,..., C6) sont conçues de façon fermée, à l'exception de la dernière face avant de l'élément de profilé creux le plus supérieur (A6, B6, C6) placée dans le passage pour la vapeur dans la direction longitudinale.

4. Condenseur de vapeur selon une ou plusieurs des revendications précédentes, caractérisé en ce que le dispositif d'air de refroidissement (16) présente plusieurs dispositifs de ventilateurs (16.1 ; 16.2 ; 16.3), qui sont disposés sur la paroi extérieure latérale du corps (12) ou pour l'essentiel parallèlement à la direction longitudinale des profilés creux et qui en premier lieu alimentent en air de refroidissement les surfaces avant fermées (22) et/ou les parois longitudinales des éléments de profilés creux (A1,..., A6 ; B1,..., B6 ; C1,..., C6).

5. Condenseur de vapeur selon une ou plusieurs des revendications précédentes, caractérisé en ce que les éléments de profilés creux (A1,..., A6 ; B1,..., B6 ; C1,..., C6) présentent en alternance l'inclinaison N par rapport à une ligne horizontale.

6. Condenseur de vapeur selon une ou plusieurs des revendications précédentes, caractérisé par une direction de déviation qui dévie vers le bas l'air sortant en premier lieu au niveau de la zone d'extrémité ouverte du profilé creux le plus supérieur.

7. Condenseur de vapeur selon une ou plusieurs des revendications précédentes, caractérisé en ce qu'il est présent un dispositif de raccordement (30) en premier lieu dans la zone d'extrémité de l'élément de profilé creux le plus supérieur (A6, B6, C6) destiné à raccorder un dispositif d'alimentation pour un milieu de nettoyage.

8. Condenseur de vapeur selon une ou plusieurs des revendications précédentes, caractérisé en ce que le dispositif de raccordement est conçu sous forme d'un dispositif d'adaptateur amovible (30).

9. Condenseur de vapeur selon une ou plusieurs des revendications précédentes, caractérisé en ce que les éléments de profilés creux (A1,..., A6 ; B1,..., B6 ; C1,..., C6) présentent une section transversale de tube rectangulaire/ de tube carré/ de tube rond.

10. Condenseur de vapeur selon une ou plusieurs des revendications précédentes, caractérisé en ce qu'un dispositif de cuve (18) est présent, auquel est amenée la vapeur provenant du four et avec lequel le passage pour la vapeur (14) communique par un accouplement hydraulique, en particulier le canal d'alimentation en eau fraîche destinée au four étant à cet égard installé par zone dans ce dispositif de cuve.

11. Condenseur de vapeur selon une ou plusieurs des revendications précédentes, caractérisé en ce que le dispositif de cuve (18) présente une unité d'évacuation (24), qui présente en particulier un dispositif de raccordement pour un dispositif d'évacuation destinée au condensat produit.

12. Condenseur de vapeur selon les revendications 7, 8 et 11, caractérisé en ce que le dispositif d'alimentation et le dispositif d'évacuation sont couplés par l'intermédiaire d'un dispositif de pompe.

13. Condenseur de vapeur selon une ou plusieurs des revendications précédentes, caractérisé en ce que le corps présente une unité de capot amovible.

14. Condenseur de vapeur selon une ou plusieurs des revendications précédentes, caractérisé en ce que plusieurs passages de vapeur sont présents (figure 1), qui sont formés par des éléments de
profilés creux placés à côté les uns des autres et successivement enfichés à l'intérieur du corps.

15. Condenseur de vapeur selon une ou plusieurs des revendications précédentes, caractérisé en ce que les éléments de profilés creux et/ou les manchons de raccordement sont fabriqués en acier spécial ou en aluminium.

16. Condenseur de vapeur selon la revendication 2, caractérisé en ce que le manchon de raccordement est réalisé sous forme de joint torique (70).
